# EUROPEAN PATENT APPLICATION

(11) **EP 4 760 519 A1**
(43) Date of publication of application: **17.06.2026**
(21) Application number: 24307063.8
(22) Date of filing: 10.12.2024
(51) Int. Cl.: G06F 16/13, G06F 16/435, G06F 16/61

(54) **METHODS AND SYSTEMS FOR UPDATING A FACIAL DIGITAL IMAGE IN AN ELECTRONIC DOCUMENT**

(71) Applicant: THALES DIS FRANCE SAS, 92190 Meudon (FR)
(72) Inventor: DUBOUCHER, Thomas, 92130 ISSY-LES-MOULINEAUX (FR); LIU, Yishu, 92700 COLOMBES (FR); TAN, Kent Derrick, 78220 VIROFLAY (FR); BOUTET, Olivier, 45000 ORLEANS (FR)
(74) Representative: Grevin, Emmanuel

(57) **Abstract**

Embodiments of the present disclosure relates to a server, a user device, and methods for updating a facial digital image in an electronic document. A method comprises the steps of receiving, from a user, a selection of a facial digital image update option at a user interface of a software application executed on a user device. The method further comprises the steps of receiving a new facial digital image upon the selection of the facial digital image update option. The method also comprises the steps of transmitting a digital certificate generation request to a server. The method also comprises the steps of receiving a digital certificate comprising the new facial digital image and a new SOD and updating the electronic document with the new facial digital image and the new SOD associated with the new facial digital image.

## Description

### Field of the invention

In general, the present disclosure relates to electronic documents. More particularly, the exemplary embodiments of the present disclosure relate to servers, devices and/or methods for updating a facial digital image of a user in an electronic document associated with a user.

### Background of the invention

With age, the physical appearance of a user change. Particularly, face or facial features change since the birth of the user till adolescence and from adolescence till the old age. When the face or facial features of the user change over the period of time, an electronic document associated with the user also needs to be updated with a new/latest digital image of the user. If such electronic document associated with the user is not updated with the new/latest digital image, it becomes difficult to use the electronic document as a current digital image of the user on the electronic document does not match with current face or facial features of the user.

Such mismatch of the current digital image of the user on the electronic document with the current face or facial features of the user renders the electronic document useless and makes it outdated.

Therefore, there is a need of a hassle-free, automatic, and an easy solution for updating the facial digital image of the user in the electronic document. There is also a need of a solution for updating the facial digital image of the user in the electronic document which matches with the current face or facial features of the user.

### Summary of the Invention

In some exemplary embodiments, a method is provided for updating a facial digital image in an electronic document. The method comprises the step of receiving, from a user, a selection of a facial digital image update option at a user interface of a software application executed on a user device. The method comprises the step of receiving a new facial digital image associated with the user upon the selection of the facial digital image update option. The method comprises the step of transmitting a digital certificate generation request to a server, wherein the certificate generation request comprises the new facial digital image. The method comprises the step of receiving a digital certificate for the electronic document, wherein the digital certificate comprises the new facial digital image and a new SOD associated with the new facial digital image. The method comprises the step of updating the electronic document with the new facial digital image and the new SOD associated with the new facial digital image received in the digital certificate.

In some exemplary embodiments, a data group is stored in a logical data structure of the electronic document corresponding to the facial digital image update option.

In some exemplary embodiments, the data group in the logical data structure defines a mandatory data element for updating the new facial digital image.

In some exemplary embodiments, the electronic document is updated using a match on card mechanism.

In some exemplary embodiments, a method is provided for updating a facial digital image in an electronic document. The method comprises the step of receiving a digital certificate generation request comprising at least one of a new facial digital image associated with a user, value/s of a first data group (DG1), a first personalized SOD for DG1, value/s of a second data group (DG2), and a second personalized SOD for DG2. The method comprises the steps of dermining the integrity of the digital certificate generation request and performing quality check of the new facial digital image upon receiving the digital certificate generation request. The method comprises the step of determining if the new facial digital image of the user corresponds to a current age of the user after the quality check of the new facial digital image. The method comprises the step of generating a digital certificate for the electronic document with the new facial digital image and a new SOD when the new facial digital image of the user corresponds to the current age of the user.

In some exemplary embodiments, the steps are performed by a server or a software application executed on a user device.

In some exemplary embodiments, the step of determining the integrity of the digital certificate generation request further comprises the steps of computing a hash value of the value/s of the first data group (DG1) received from the user device; comparing the computed hash value of the first data group (DG1) with the first personalized SOD for DG1 received from the user device; computing a hash value of the value/s of the second data group (DG2) received from the user device; and comparing the computed hash value of the second data group (DG2) with the second personalized SOD for DG2 received from the user device.

In some exemplary embodiments, the quality check of the new facial digital image compirses at least one of: a clear visibility of the face of the user in the new facial digital image, an angle of face of the user in the new facial digital image, and pixel requirements of the new facial digital image.

In some exemplary embodiments, the step of determining if the new facial digital image of the user corresponds to the current age of the user further comprises the steps of extracting a last facial digital image of the user; extracting a last age of the user corresponding to the last facial digital image of the user; calculating a current age of the user based on birth details of the user; comparing the new facial digital image of the user with the last facial digital image of the user; and comparing a current age of the user with the last age of the user.

In some exemplary embodiments, a user device is provided for updating a facial digital image in an electronic document. The user device comprises a receiver configured to receive, from a user, a selection of a facial digital image update option at a user interface of a software application executed on a user device; and receive a new facial digital image associated with the user upon the selection of the facial digital image update option. The user device comprises a transmitter configured to transmit a digital certificate generation request to a server, wherein the certificate generation request includes the new facial digital image. The receiver is configured to receive a digital certificate for the electronic document, wherein the digital certificate comprises the new facial digital image and a new SOD. The processing unit is configured to update the electronic document with the new facial digital image and the new SOD associated with new facial digital image received in the digital certificate.

In some exemplary embodiments, the processing unit is further configured to extract a data group in a logical data structure of the electronic document corresponding to the facial digital image update option.

In some exemplary embodiments, a server is provided for updating a facial digital image in an electronic document. The server comprises a receiver configured to receive a digital certificate generation request from a user device, wherein the digital certificate generation request comprises at least one of a new facial digital image associated with a user, value/s of a first data group (DG1), a first personalized SOD for DG1, value/s of a second data group (DG2), and a second personalized SOD for DG2. The server comprises a processing unit configured to determine the integrity of the digital certificate generation request and perform quality check of the new facial digital image upon determining the integrity of the digital certificate generation request. The processing unit is also configured to determine if the new facial digital image of the user corresponds to a current age of the user after the quality check of the new facial digital image; and generate a digital certificate for the electronic document with the new facial digital image and a new SOD when the new facial digital image of the user corresponds to the current age of the user. The server comprises a transmitter configured to transmit the digital certificate to the user device.

In some exemplary embodiments, the processing unit is further configured to: computing a hash value of the value/s of the first data group (DG1) received from the user device; comparing the computed hash value of the first data group (DG1) with the first personalized SOD for DG1 received from the user device; computing a hash value of the value/s of the second data group (DG2) received from the user device; and comparing the computed hash value of the second data group (DG2) with the second personalized SOD for DG2 received from the user device.

In some exemplary embodiments, the processing unit is further configured to: extract a last facial digital image of the user; extract a last age of the user corresponding to the last facial digital image of the user; calculate a current age of the user based on birth details of the user; compare the new facial digital image of the user with the last facial digital image of the user; and compare a current age of the user with the last age of the user

In some exemplary embodiments, the electronic document is an electronic passport.

### Brief description of the drawings

Figure 1 illustrates an exemplary way of updating physical image in a physical document, in accordance with an existing solution,
Figure 2 illustrates an exemplary way of updating digital image in an electronic document of the present disclosure, in accordance with an exemplary embodiment of the present disclosure,
Figure 3 illustrates an exemplary system architecture for updating facial digital image in an electronic document, in accordance with an exemplary embodiment of the present disclosure,
Figure 4 illustrates an exemplary method flow diagram by a software application executing on a user device for updating facial digital image in an electronic document, in accordance with an exemplary embodiment of the present disclosure,
Figure 5 illustrates an exemplary method flow diagram by a server for updating facial digital image in an electronic document, in accordance with an exemplary embodiment of the present disclosure, and
Figure 6 depicts a block diagram of a server and/or a user device, in accordance with an exemplary embodiment of the present disclosure.

### Detailed description of the preferred embodiments

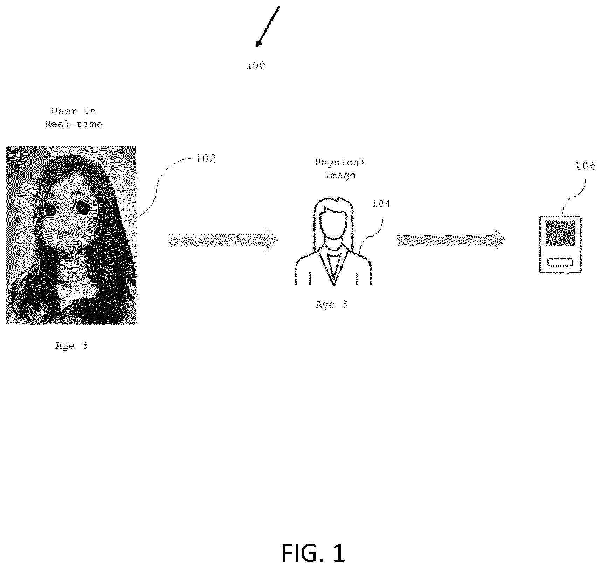

Figure 1 depicts an exemplary way 100 of updating physical image in a physical document 106, in accordance with an existing solution. A user 102 in real-time has attained an age of three years, as an example. If parents/guardians of the user 102 wants to get the physical document 106 of the user 102, then, the parents/guardians may have to apply for the physical document 106 to a government authority of a country. Such physical document 106 always comprise a physical facial image or a physical photo 104 of the user 102 as an identity proof of the user 102.

As used herein, the term "physical document" may refer to any physical or tangible government document approved and issued by a government authority of a country. Such country has provided a citizenship to the user 102 and by the rights of the citizenship of that country, the user 102 is eligible to apply and get the physical document 106 from the government authority of that country.

With the time, face or facial features of the user 102 change and this gives the need for manually updating the physical facial image 104 of the user 102 in the physical document 106. To update the physical document 106 with a new/latest physical facial image of the user 102, the parents/guardians have to take the user 102 to the government authority. This existing process of updating the physical document 106 with the new/latest physical image of the user 102 is manual in nature, time-consuming and requires multiple physical visits to the government authority.

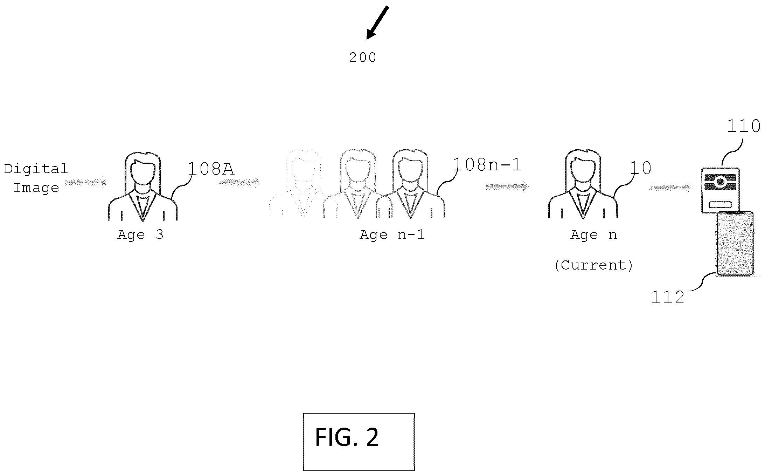

Figure 2 depicts an exemplary way 200 of updating a facial digital image 108n in an electronic document 110 of the present disclosure, in accordance with an exemplary embodiment of the present disclosure. Considering as an example, at the age of 3 years of the user 102 of Figure 1, a facial digital image 108A is captured and placed in the electronic document 110 of the user 102 when the electronic document 110 is created for the first time.

As used herein, the term "electronic document" may refer to any document approved and issued by a government authority of a country. Such country has provided a citizenship to the user 102 and by the rights of the citizenship of that country, the user 102 is eligible to apply and get the electronic document 110 from the government authority of that country.

Such electronic document 110 may comprise an electronic chip (e-chip) embedded therein for the identification purpose. The e-chip may include a memory to store data (such as identification data travel history data related to the user 102. The electronic document 110 may correspond to at least one of an electronic travel document (such as an electronic passport), an electronic permanent resident document or an Aadhar number or a permanent/personal account number (PAN) or any unique identification citizenship number etc.

As used herein, the term "user device" may refer to a smart device, a cellular device, a mobile phone, a smart watch, a tablet, a personal digital assistance, a laptop, a personal /desktop computer, a television, or any such device that is obvious to a person skilled in the art.

When the electronic document 110 is created for the first time at the age of 3 years (as an example) of the user 102, a logical data structure (referred hereinafter as "LDS") is created and placed in a file stored inside the e-chip of the electronic document 110.

The LDS of the electronic document 110 is as follows in exemplary Table 1 below.

**Exemplary Table 1**

| **Field** | **Data Group** | **Data Elements** |
|---|---|---|
| Detail(s) recorded in MRZ | Data Group 1 | Document Type |
| | | Issuing State or Organization |
| | | Name (of Holder) |
| | | Document Number |
| | | Nationality |
| | | Date of Birth... |
| | | ... Check Digit - Optional Data Field |
| | | Composite Check Digit |
| Encoded | Data Group 2 | Encoded Face |
| Information Features(s) | Data Group 3 | Encoded Finger(s) |
| | Data Group 4... | Encoded Eye(s) ... |
| Encoded Security Features(s) | ...Data Group 16 | ...Person (s) to Notify |

As depicted, the LDS comprises one or more data groups (DGs) and each data group (DG) has one or more data elements. For an instance, the LDS shown in the exemplary Table 1 above has a total of 16 data groups. As an example, the first data group (DG1) may be a machine-readable zone (MRZ) comprising data elements such as document type, issuing state or organization, name (of holder), document number, nationality, date of birth, check digit - optional data field, composite check digit etc. Similarly, the second data group (DG2) has only one data element i.e., Encoded Face. It is to be noted here that only a limited number of data groups and data elements are shown in the exemplary Table 1 for the sake of brevity. It is also to be noted here that the LDS shown in the exemplary Table 1 is applicable for the electronic document 110; however, it is understood for a person skilled in the art that the LDS structure may vary depending on the type of the electronic document and its purpose and usage.

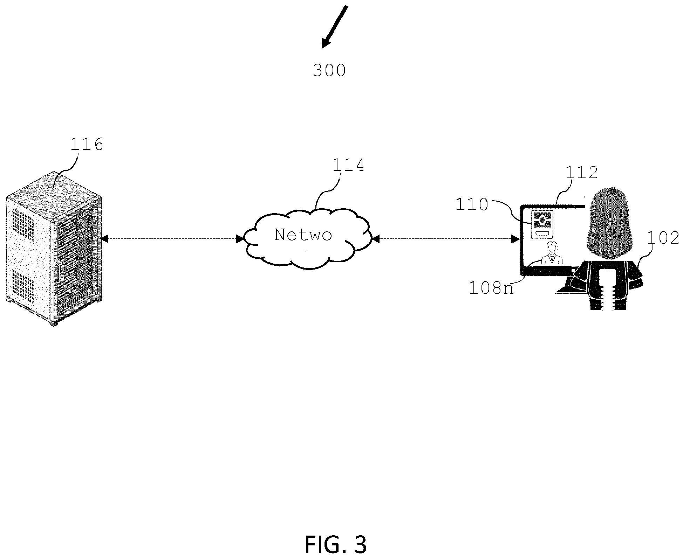

When the electronic document 110 may be created for the first time, the file inside the e-chip may comprise a personalized document security object (referred herein after as "personalized SOD" for each of the data groups (DGs). For an instance, for the first data group (DG1), a first personalized SOD is stored and for the second data group (DG2), a second personalized SOD is stored and so on. Such personalized SOD may comprise a hash value of a particular data group and a digital signature of the hash value of that particular data group. The personalized SOD may be computed by a server (shown in Figure 3). And, the digital signature may be computed dynamically from a distant KMS (Key Management System) containing a private key of the government authority who signs the electronic document 110.

The LDS may define one or more optional as well as mandatory data elements in each data groups. Some examples of optional data elements are "Optional Details(s)" of data group 13 or "Security Options (Conditional" of data group 14. Some examples of mandatory data elements are "Encoded Face" of data group 2 and "Name (of Holder)" of data group 1. The mandatory data elements are needed for processing the request for creating the electronic document 110 and updating the information or field in the electronic document 110.

As the face or facial features of the user 102 change, corresponding facial digital images 108n-1 at various ages of n-1 years of the user 102 may be captured and updated in the electronic document 110. As shown in Figure 2, the electronic document 110 of the user 102 currently have the facial digital image 108n-1 and when the user 102 attains the age of "n" years, the user 102 may wish to update a last facial digital image 108n-1 with a new facial digital image 108n in the electronic document 110. Considering an example that the user 102 was 10 years old when the electronic document 110 was last updated with the last facial digital image 108n-1 and now, the user 102 has attained the age of 15 years and the electronic document 110 now needs to be updated with the new facial digital image 108n. How the new facial digital image 108n is updated in the electronic document 110 is explained in Figures 3, 4 and 5 below.

Figure 3 depicts an exemplary system architecture 300 for updating facial digital image 108n in the electronic document 110, in accordance with an exemplary embodiment of the present disclosure. As depicted, the user device 112 of the user 102 may be connected with a server 116 through a network 114. As described above, the electronic document 110 may be stored at and accessed by the user 102 through the user device 112.

As used herein, the term "server" may refer to a physical server in a data center or a cloud server running in a cloud computing environment and possessing the capabilities of performing the procedures or operations as described herein.

As used herein, the term "network" may refer to a wired network or a wireless network. The wired network generally requires cables, ethernet or wires to connect the user device 112 with the network 114. The wireless network enables the user device 112 to get wirelessly connected with the network 114. Examples of such wireless network includes, but is not limited to, a cellular network (such as GSM network, CDMA Network or any other telecommunication mobile network) or a short-range network (WiFi network, Near-field communication (NFC), a ZigBee network, a bluetooth network etc.).

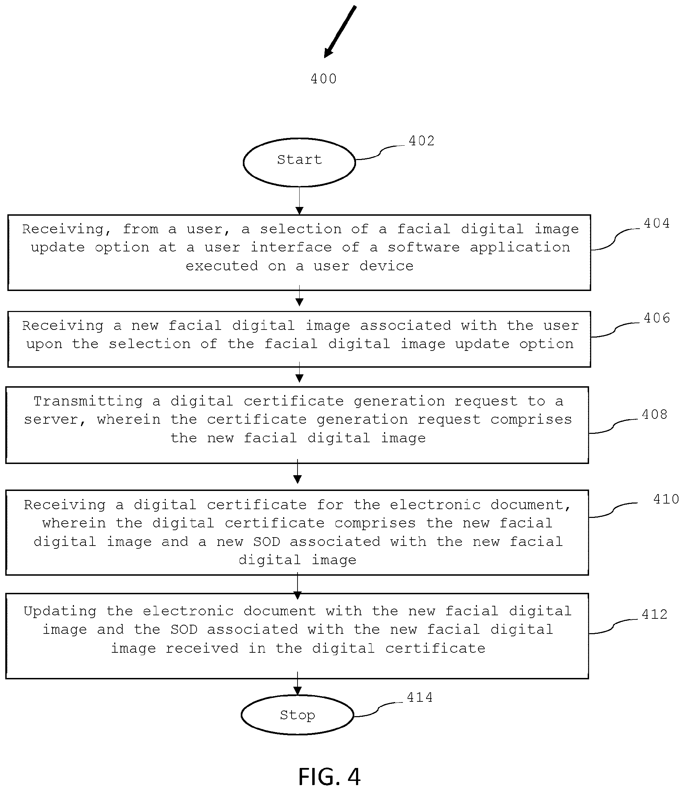

Figure 4 illustrates an exemplary method flow diagram 400 implemented at the user device 112 for updating the new facial digital image 108n in the electronic document 110, in accordance with an exemplary embodiment of the present disclosure.

At step 402, the method flow diagram 400 starts.

At step 404, when the user 102 wishes to update the electronic document 110 with the new facial digital image 108n, the user 102 may open a software application of the electronic document 110 by using a user interface of the user device 112. If the user 102 is a minor or below the legal age as classified by the country of the user 102, then, the guardians/parents of the user 102 may implement the following procedure as described herein.

Herein, the software application may be a mobile application, or a desktop application executed by the user device 112. Such software application may be an application provided or developed by a government of a country or by an authorized vendor of the government of that country.

After opening the software application, the user 102 may select (by clicking or tapping) on a facial digital image update option (not shown) provided at the user interface of the software application executed on the user device 112. On selecting the facial digital image update option, the software application extracts the data group and the data element of the LDS corresponding to the facial digital image update option.

To make any change or edit or update any information or field in the electronic document 110, a corresponding data group and a corresponding data element in the LDS of that electronic document 110 is extracted or retrieved. In this case, for updating the electronic document 110 with the new facial digital image 108n using the facial digital image update option, the corresponding data group DG2 and the corresponding data element "Encoded Face" is extracted.

At step 406, the software application executed by the user device 112 receives the new facial digital image 108n associated with the user 102 upon the selection of the facial digital image update option. When the user 102 selects the facial digital image update option, such selection displays a message or an instruction for the user 102 to upload a new facial digital image 108n of the user 102. To upload the new facial digital image, in a first exemplary embodiment, the user 102 may open a camera accessible within the user interface of the software application executed on the user device 112 and click an image in real-time using the camera. In a second exemplary embodiment, the user 102 may use a pre-captured image already stored in the memory of the user device 112. This uploaded new facial digital image is received by the software application executed by the user device 112.

Optionally, at this step 406, the software application executed by the user device 112 calculate a current age of the user 102 based on birth details of the user 102 as stored in the data element of "date of birth" as specified in the data group 1 of the LDS.

At step 408, the software application communicates with the user device 112 for transmitting a digital certificate generation request to the server 116 through the network 114. Herein, the digital certificate generation request may comprise value/s of the first data group (DG1), the first personalized SOD for DG1, value/s of the second data group (DG2), the second personalized SOD for DG2, and/or the new facial digital image 108n associated with the user 102 as mentioned in step 404.

Further, the digital certificate generation request may be signed by the software application before transmitting the digital certificate generation request to the server 116. Optionally, at this step 410, the digital certificate generation request may also include the current age of the user 102 as calculated in the above step 408.

The server 116 receives the digital certificate generation request, from the user device 112 through the network 114, comprising the new facial digital image 108n associated with the user 102. In some exemplary embodiments, the digital certificate generation request is sent in the form of data packets containing a header field, payload fields, and a trailer field. And, the payload field/s of the data packets has the new facial digital image 108n.

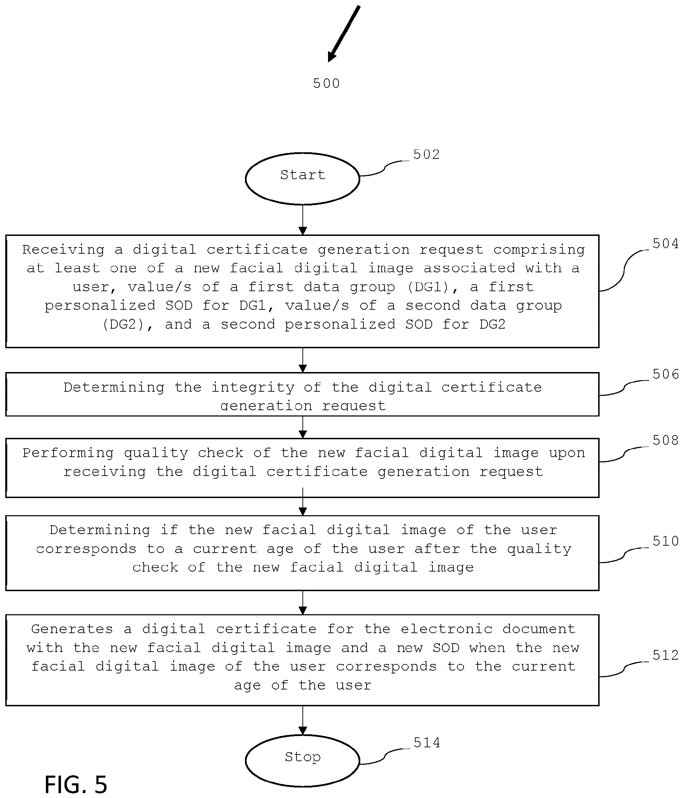

On receiving the digital certificate generation request, the server 116 performs the steps as explained in an exemplary method flow diagram 500 of Figure 5. In particular, the server 116 may determine a security object document (referred hereinafter as "SOD") for the new facial digital image 108n associated with the user 102 for verifying the integrity of the new facial digital image 108n. And, upon verifying the integrity of the new facial digital image 108n, the server 116 generates a digital certificate for the electronic document 100 with the new facial digital image 108n (and a new SOD associated with the new facial digital image 108n) and transmits the digital certificate to the user device 112 through the network 114.

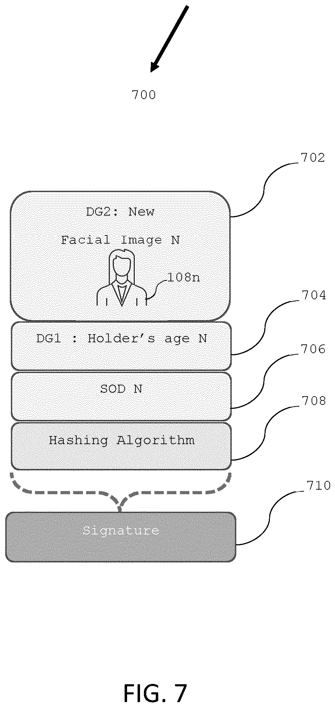

At step 410, the user device 112 receives a digital certificate 700 for the electronic document 110 with the new facial digital image 108n and the new SOD. In some exemplary embodiments, the digital certificate 700 as shown in Figure 7 comprises one or more field such as a DG2 field 702 corresponding to the facial digital image update option. The digital certificate 700 also comprises a DG1 field 704 mentioning a current age of the user 102 corresponding to the new facial digital image 108n. The digital certificate 700 also comprises a SOD field 704 mentioning the new SOD for the new facial digital image 108n as calculated by the server 116 and a hashing algorithm field 708 mentioning a name of the hashing algorithm being used to calculate the new SOD. Further, the digital certificate 700 also comprises a digital signature field 704 having a digital signature of the government authority.

At step 412, on receiving the digital certificate 700 for the electronic document 110, the software application executed in the user device 112 updates the electronic document 110 with the new facial digital image 108n and the new SOD associated with the new facial digital image 108n received in the digital certificate 700. Before updating electronic document 110, the software application of the user device 112 checks the digital signature field 704 for verifying the digital signatures of the government authority.

If the digital signature is correct, then, the user application imports the new facial digital image 108n and the new SOD to a security document of the LDS with a perform security operation command in this way:
a) case where the security document does not contain any value of the second data group (DG2): Adding the new facial digital image 108n and the new SOD; or
b) case where the security document contains value of the second data group (DG2): Updating the last facial digital image 108n-1 and the first personalized SOD with the new facial digital image 108n and the new SOD. Herein, the last facial digital image 108n-1 in the electronic document 110 is replaced with the new facial digital image 108n of the digital certificate 700.

At step 414, the method flow diagram 400 ends.

Figure 5 illustrates an exemplary method flow diagram implemented at the server 116 for updating the new facial digital image 108n in the electronic document 110, in accordance with an exemplary embodiment of the present disclosure.

At step 502, the method flow diagram 500 starts.

At step 504, the server 116 may receive the digital certificate generation request comprising the value/s of the first data group (DG1), the first personalized SOD for DG1, the value/s of the second data group (DG2), the second personalized SOD for DG2, the new facial digital image 108n associated with the user 102, and the digital signature of the first and second personalized SODs. Such digital certificate generation request may be received from the user device 112 through the network 114 as explained above in step 410 of the method flow diagram 400.

At step 506, the server 116 may determine the integrity of the digital certificate generation request. For this, the server 116 may check if the digital certificate generation request has been signed with a genuine user application by checking the digital signature appended with such request. The server 116 may also compute a hash value of the received first data group (DG1) and then, compare the computed hash value of the DG1 with the received first personalized SOD for DG1. Similarly, the server 116 may also compute a hash value of the received second data group (DG2) and then, compare the computed hash value of the DG2 with the received second personalized SOD for DG2.

Herein, if the computed hash value of the received DG1 matches with the received first personalized SOD for DG1, then, the server 116 verifies the integrity of the digital certificate generation request. And if, the computed hash value of the received DG1 does not match with the received first personalized SOD for DG1, then, the server 116 does not verify the integrity of the digital certificate generation request and thus, discards or rejects the digital certificate generation request.

And, if the computed hash value of the received DG2 matches with the received second personalized SOD for DG2, then, the server 116 verifies the integrity of the digital certificate generation request. And if, the computed hash value of the received DG2 does not match with the received second personalized SOD for DG2, then, the server 116 does not verify the integrity of the digital certificate generation request and thus, discards or rejects the digital certificate generation request.

Further, the server 116 may also calculate the new SOD for the new facial digital image 108n by using the hashing algorithm such as Message Digest (MD) 5, Secure Hash Algorithm (SHA) 2 and Cyclical Redundancy Checking (CRC) 32 which are obvious to a person skilled in the art. And, the server 116 may calculate a digital signature of the new SOD computed dynamically from the distant KMS containing the private key of the government authority.

At step 508, the server 116 may perform quality check of the new facial digital image 108n upon receiving the digital certificate generation request. For this, the server 116 may check if the face of the user 102 in the new facial digital image 108n is clearly visible. For an example, sometimes, a user may be looking at a left or right direction or looking at a different angle instead of straight direction, thus, making the face unclear in the new facial digital image 108n. As another example, the server 116 may also check if the new facial digital image 108n is clicked or captured in proper light. As an example, the light may be too bright or low in the new facial digital image 108n making the face unclear. Also, the server 116 may also check if the new facial digital image 108n has proper pixel and size requirement as pre-specified by the government authority. Further, the server 116 may also check if the new facial digital image 108n has proper background color as pre-specified by the government authority.

At step 510, the server 116 may determine if the new facial digital image 108n of the user 102 corresponds to a current age of the user 102 after the quality check of the new facial digital image 108n. In a first exemplary embodiment, the software application (in the step 406 of the method flow diagram 400) calculates the current age of the user 102 based birth details of the user 102 as stored in the data element of "date of birth" as specified in the data group 1 of the LDS and may transmit the calculated current age of the user 102 along with the digital certificate generation request as explained in the step 410 of the method flow diagram 400. In a second exemplary embodiment, the server 116 itself calculates the current age of the user 102 based on the data element of "date of birth" as stored by the server 116.

Furthermore, the server 116 may also extract the last facial digital image 108n-1 of the user 102 and a last age of the user 102 corresponding to the last facial digital image 108n-1 of the user 102. To extract the last facial digital image 108n-1 of the user 102 and the last age of the user 102, the server 116 may store the last facial digital image 108n-1, the last age of the user 102 and a corresponding SOD of the last facial digital image 108n-1.

Once the server 116 calculates the current age and extracts the last facial digital image 108n-1, the last age of the user 102, the server 116 may then compare the last facial digital image 108n-1 with the new facial digital image 108n. The server 116 may also compare the last age with the current age of the user 102. By doing such comparison, the server 116 determines if differences/changes between face or facial features of the user 102 in the last facial digital image 108n-1 at the last age and face or facial features of the user 102 in the new facial digital image 108n at the current age are real or obvious with respect to time-period difference between the last age and the current age. Considering the same example that the user 102 was 10 years old when the electronic document 110 was last updated with the last facial digital image 108n-1 and now, the user 102 has attained the age of 15 years and the electronic document 110 now needs to be updated with the new facial digital image 108n. So, the time-period difference between the current age of 15 years and the last age of 10 years is five years. In view of these five years of time-period difference, the server 116 may determine that differences/changes between facial features in the last facial digital image 108n-1 and the new facial digital image 108n are real or obvious. The present disclosure may train and utilize artificial intelligence / machine learning (AI/ML) algorithms to make such determination as described herein.

If the server 116 determines that the differences between face or facial features in the last facial digital image 108n-1 at the last age and face or facial features in the new facial digital image 108n at the current age are real or obvious with respect to time-period difference, then, the server 116 may determine that the new facial digital image 108n of the user 102 corresponds to the current age of the user 102. And, if the server 116 determines that the differences between face or facial features in the last facial digital image 108n-1 at the last age and face or facial features in the new facial digital image 108n at the current age are unreal or not obvious with respect to time-period difference, then, the server 116 may determine that the new facial digital image 108n of the user 102 does not correspond to the current age of the user 102. And therefore, the server 116 may discard the digital certificate generation request.

At step 512, the server 116 may generate the digital certificate 700 for the electronic document 110 with the new facial digital image 108n when the new facial digital image 108n of the user 102 corresponds to the current age of the user 102. After generating the digital certificate 700 for the electronic document 10 of the user 102, the server 116 may transmit the digital certificate 700 to the user device 112 through the network 114. Then, the user device 112 receives the digital certificate 700 through the network 114 and communicates the digital certificate 700 to the software application for updating the electronic document 110 with the new facial digital image 108n and the new SOD associated with the new facial digital image 108n received in the digital certificate 700.

At step 514, the method flow diagram 500 ends.

The present disclosure also encompasses a "match on card" (referred hereinafter as "MOC") mechanism. The MOC mechanism enables the software application executing on the user device 112 to implement an internal biometric algorithm in the user device 112 to check that the new facial digital image 108n matches the current face or facial features of the user 102 before updating the electronic document 110 with the new facial digital image 108n and the new SOD. Thus, even in the absence of any network, the new facial digital image 108n can be easily updated in the electronic document 110 by the software application executing on the user device 112.

Therefore, the present disclosure offers the technical advantage of a hassle-free, automatic, and an easy solution for updating the new facial digital image 108n of the user 102 in the electronic document 110. The present disclosure also offers the technical advantage of updating the new facial digital image 108n of the user 102 which matches with or corresponds to the current face or facial features of the user 102.

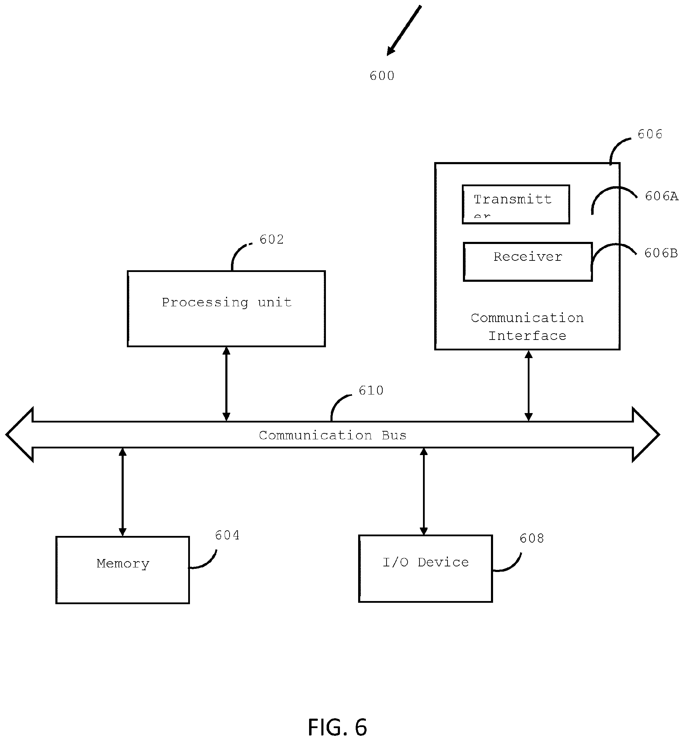

Figure 6 depicts a block diagram of the server 116 and/or the user device 112, in accordance with an exemplary embodiment of the present disclosure. The server 116 and/or the user device 112 may include processing unit 602, memory 604, a communication interface 606, and input/output devices 608. Each of these components may be operatively coupled to a communication bus 610, which may be configured, e.g., for optical and/or electrical communication.

The processing unit 602 may include a central processing unit, application-specific integrated circuit (ASIC), digital signal processor (DSP), or another type of processing circuit. The processing unit 602 may be implemented using mainframe, distributed processor, multi-core, parallel, grid, or other architectures. The processing unit 602 may be configured to implement the functions, procedures, and/or methods proposed by the present invention as described in the above Figures. Further, layers of a wireless interface protocol may be implemented by the processing unit 602.

The memory 604 may be any suitable medium that participates in providing instructions to the processing unit 602 for execution. For example, the memory 604 may be non-transitory or non-volatile medium, such as a magnetic disk or solid-state non-volatile memory or volatile medium such as random-access memory (RAM). The instructions or modules stored on memory 604 may include machine-readable instructions executed by the processing unit 602 that cause the processing unit 602 to perform the methods and functions as described herein.

Further, the memory 604 may be communicatively coupled to the processing unit 602 and store information related to operations of the processing unit 608. The memory 604 may be located inside or outside the processing unit 602 and may be connected to processing unit 608 through various well-known means.

The communication interface 606 may use any apparatus such as a transceiver or an RF module to communicate with another device or the network 114 such as the Ethernet, a radio access network (RAN), or a wireless local area network (WLAN). In other examples, the communication interface 606 may be a Local Area Network (LAN) interface, a wireless 802.11x interface, a 3G, 4G, 5G, or 6G mobile WAN or a WiMax WAN.

In some exemplary embodiments, a receiver 606B of the communication interface 606 may be configured to receive, from the user 102, the selection of the facial digital image update option at the user interface of the software application executed on the user device 112. The receiver 606B may be configured to receive the new facial digital image 108n associated with the user 102 upon the selection of the facial digital image update option. A transmitter 606A may be configured to transmit the digital certificate generation request to the server 116 wherein the certificate generation request includes the new facial digital image. The receiver 606B may be configured to configured to receive the digital certificate for the electronic document 11, wherein the digital certificate comprises the new facial digital image 108n and the SOD. The processing unit 602 may be configured to update the electronic document 110 with the new facial digital image 108n and the new SOD associated with the new facial digital image 108n received in the digital certificate 700.

In some exemplary embodiments, a receiver 606B of the communication interface 606 may be configured to receive the digital certificate generation request from the user device 112, wherein the digital certificate generation request comprises the new facial digital image 108n associated with the user 102. The processing unit 602 may be configured to determine the integrity of the digital certificate generation request and perform quality check of the new facial digital image 108n upon determining the integrity of the digital certificate generation request. The processing unit 602 may also be configured to determine if the new facial digital image 108n of the user 102 corresponds to the current age of the user 102 after the quality check of the new facial digital image 108n. The processing unit 602 may also be configured to generate a digital certificate for the electronic document 110 with the new facial digital image 108n and a new SOD when the new facial digital image 108n of the user 102 corresponds to the current age of the user 102. A transmitter 606A may be configured to transmit the digital certificate to the user device 112.

The input/output devices 608 may include one or more input and output devices. The input device may be a keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. The output device may be a printer, fax machine, video display, liquid crystal display (LCD), light-emitting diode (LED), Organic-LED (OLED), Quantum Dot Light Emitting Diode (QLED), Micro LED, Mini-LED, Quantum Dot OLED (QD-OLED), audio speaker, etc.

Implementations and all of the functional operations described in this description may be realized in digital electronic circuitry, or in computer software, firmware, or hardware, including the structures disclosed in this description and their structural equivalents, or in combinations of one or more of them.

The foregoing discussion of the disclosure has been presented for purposes of illustration and description. The foregoing is not intended to limit the disclosure to the form or forms disclosed herein. In the foregoing detailed description for example, various features of the disclosure are grouped together in one or more examples, configurations, or aspects for the purpose of streamlining the disclosure. The features of the examples, configurations, or aspects of the disclosure may be combined in alternate examples, configurations, or aspects other than those described above. Hence, the present disclosure and drawings should not be considered in a limiting sense, as it is understood that an invention presented within a disclosure is in no way limited to those examples specifically illustrated.

Accordingly, the above description and any accompanying drawings, illustrations, and figures are intended to be illustrative but not restrictive. The scope of any invention presented within this disclosure should, therefore, be determined not with simple reference to the above description and those examples shown in the figures, but instead should be determined with reference to the pending claims along with their full scope or equivalents.

## Claims

1. A method for updating a facial digital image in an electronic document, the method comprising:
- receiving, from a user, a selection of a facial digital image update option at a user interface of a software application executed on a user device;
- receiving a new facial digital image associated with the user upon the selection of the facial digital image update option;
- transmitting a digital certificate generation request to a server, wherein the certificate generation request comprises the new facial digital image;
- receiving a digital certificate for the electronic document, wherein the digital certificate comprises the new facial digital image and a new SOD associated with the new facial digital image; and
- updating the electronic document with the new facial digital image and the new SOD associated with the new facial digital image received in the digital certificate.

2. The method according to previous claim, further comprising, storing a data group in a logical data structure of the electronic document corresponding to the facial digital image update option.

3. The method according to any previous claims, wherein the data group in the logical data structure defines a mandatory data element for updating the new facial digital image.

4. The method according to any previous claims, wherein the electronic document is updated using a match on card mechanism.

5. A method for updating a facial digital image in an electronic document, the method comprising:
- receiving a digital certificate generation request comprising at least one of a new facial digital image associated with a user, value/s of a first data group (DG1), a first personalized SOD for DG1, value/s of a second data group (DG2), and a second personalized SOD for DG2;
- determining the integrity of the digital certificate generation request;
- performing quality check of the new facial digital image upon receiving the digital certificate generation request;
- determining if the new facial digital image of the user corresponds to a current age of the user after the quality check of the new facial digital image; and
- generating a digital certificate for the electronic document with the new facial digital image and a new SOD when the new facial digital image of the user corresponds to the current age of the user.

6. The method according to any previous claims, wherein the steps are performed by a server or a software application executed on a user device.

7. The method according to any previous claims, wherein the step of determining the integrity of the digital certificate generation request further comprises the steps of:
- computing a hash value of the value/s of the first data group (DG1) received from the user device;
- comparing the computed hash value of the first data group (DG1) with the first personalized SOD for DG1 received from the user device;
- computing a hash value of the value/s of the second data group (DG2) received from the user device; and
- comparing the computed hash value of the second data group (DG2) with the second personalized SOD for DG2 received from the user device.

8. The sever according to any previous claims, wherein the quality check of the new facial digital image compirses at least one of: a clear visibility of the face of the user in the new facial digital image, an angle of face of the user in the new facial digital image, and pixel requirements of the new facial digital image.

9. The sever according to any previous claims, wherein the step of determining if the new facial digital image of the user corresponds to the current age of the user further comprises the steps of:
- extracting a last facial digital image of the user;
- extracting a last age of the user corresponding to the last facial digital image of the user;
- calculating a current age of the user based on birth details of the user;
- comparing the new facial digital image of the user with the last facial digital image of the user; and
- comparing a current age of the user with the last age of the user.

10. A user device for updating a facial digital image in an electronic document, the user device comprising:
- a receiver configured to:
receive, from a user, a selection of a facial digital image update option at a user interface of a software application executed on a user device; and
receive a new facial digital image associated with the user upon the selection of the facial digital image update option; and
- a transmitter configured to transmit a digital certificate generation request to a server, wherein the certificate generation request includes the new facial digital image;
- the receiver configured to receive a digital certificate for the electronic document, wherein the digital certificate comprises the new facial digital image and a new SOD; and
- the processing unit configured to update the electronic document with the new facial digital image and the new SOD associated with new facial digital image received in the digital certificate.

11. The user device according to any previous claims, wherein, the processing unit is further configured to extract a data group in a logical data structure of the electronic document corresponding to the facial digital image update option.

12. A server for updating a facial digital image in an electronic document, the server comprising:
- a receiver configured to receive a digital certificate generation request from a user device, wherein the digital certificate generation request comprises at least one of a new facial digital image associated with a user, value/s of a first data group (DG1), a first personalized SOD for DG1, value/s of a second data group (DG2), and a second personalized SOD for DG2;
- a processing unit configured to:
determine the integrity of the digital certificate generation request;
perform quality check of the new facial digital image upon determining the integrity of the digital certificate generation request;
determine if the new facial digital image of the user corresponds to a current age of the user after the quality check of the new facial digital image; and
generate a digital certificate for the electronic document with the new facial digital image and a new SOD when the new facial digital image of the user corresponds to the current age of the user; and
- a transmitter configured to transmit the digital certificate to the user device.

13. The server according to any previous claims, wherein the processing unit is further configured to:
- computing a hash value of the value/s of the first data group (DG1) received from the user device;
- comparing the computed hash value of the first data group (DG1) with the first personalized SOD for DG1 received from the user device;
- computing a hash value of the value/s of the second data group (DG2) received from the user device; and
- comparing the computed hash value of the second data group (DG2) with the second personalized SOD for DG2 received from the user device.

14. The sever according to any previous claims, wherein the processing unit is further configured to:
- extract a last facial digital image of the user;
- extract a last age of the user corresponding to the last facial digital image of the user;
- calculate a current age of the user based on birth details of the user;
- compare the new facial digital image of the user with the last facial digital image of the user; and
- compare a current age of the user with the last age of the user.

15. The sever according to any previous claims, wherein the electronic document is an electronic passport.
